Europäisches Patentamt

European Patent Office

Office européen des brevets

(11) Publication number: **0 414 548 A2**

# EUROPEAN PATENT APPLICATION

(21) Application number: **90309272.4**

(22) Date of filing: **23.08.90**

(51) Int. Cl.⁵: **G11B 5/09, G11B 20/10**

(30) Priority: **25.08.89 US 399666**

(43) Date of publication of application:
**27.02.91 Bulletin 91/09**

(84) Designated Contracting States:
**DE FR GB NL**

(71) Applicant: **AMPEX CORPORATION**
**401 Broadway M.S. 3-35**
**Redwood City California 94063-3199(US)**

(72) Inventor: **Ahlgrim, Steven P.**
**250 Roble Avenue**
**Redwood City, California 94061(US)**

(74) Representative: **Horton, Andrew Robert Grant**
**et al**
**BOWLES HORTON Felden House Dower**
**Mews High Street**
**Berkhamsted Hertfordshire HP4 2BL(GB)**

(54) **Low frequency restorer.**

(57) A low frequency restorer restores the DC and low frequency contents to a digital signal which has been submitted to magnetic recording, playback and equalization processes. The restorer first provides a coarse representation of the originally recorded digital signal by providing two signals obtained by differentially clamping the equalized signal in a circuit (20) and subsequently hard limiting the difference between those signals by means of a circuit (22). The hard limited signal is fed to a low pass filter (24) and the resulting signal, which is an approximation of the missing DC and low frequency components, is utilized as a correction signal, which is summed with the equalized signal, to restore the missing components.

FIG. 2

The invention relates generally to low frequency and DC level restoration, and more particularly to an apparatus and circuits for use in restoring the low frequency and DC content to an AC signal which includes digital data and which has been subjected to magnetic recording, playback, and equalization.

BACKGROUND OF THE INVENTION

Signals subjected to magnetic recording and playback process are generally distorted because of the well known nonlinear frequency response of the recording/playback channel. Particularly when a digital signal is recorded and reproduced, it may be attenuated and distorted to such an extent that there produced signal does not provide sufficient information about the originally recorded signal, nor does it provide distinct zero crossovers necessary for accurate detection of a self clocking signal. The signal distortion is due in part to the inductive nature of the playback head and to spacing losses. The inductance of the playback head prevents recovery of low frequencies in the signal played back from the recording medium. As is well known, the playback signal is a function of the first time derivative of the recorded flux. Therefore, DC level and low frequency changes are not fully represented in the playback signal. On the other hand, spacing loss, which is a playback signal loss due to a non-zero distance between the playback head and the recording medium, contributes to high frequency attenuation. To compensate for both low and high frequency losses, it is generally known to use signal equalizers providing a substantially flat frequency response in the playback channel.

One known playback signal equalizer utilized in a digital magnetic recording/reproducing channel is described in the commonly assigned U.S. patent 4,110,798 to Miller et al. It has a low-pass integrating circuit and a high-pass differentiating circuit connected in parallel. The integrator provides an output signal which lags the input signal by 90°, and an output signal from the differentiator leads the input signal by 90°. These respective output signals, which are equal in magnitude but of opposite polarity, are algebraically combined. The resulting equalized playback signal has the desired, nearly flat, frequency response.

The above-described type of equalizer has a disadvantage that the resulting equalized signal lacks DC and low frequency information. This leads to a non-constant average DC level, generally referred to as "baseline wander". The baseline wander is known to be caused by the loss of low frequency content due to the inductive nature of the playback head. The baseline wander appears as low frequency distortion in the equalized playback signal and it may cause misdetection by either shifting the zero crossing position of the bit detection, or by introducing a phase error in the clock synchronization circuit.

The above-described type of equalizer has a further disadvantage related to boosting the low frequency content of the playback data by the integrating channel. For example, in a high track density disk recorder the data detected by the playback head will contain low frequency information from the data track of interest, as well as low frequency crosstalk from adjacent tracks. Thus the equalizer will add unwanted crosstalk into the equalized data.

Another type of play back equalizer is described in a publication "Equalization of The D.C. Null in High Density Digital Magnetic Recording", by W.D. Huber, paper 37-10, presented at the 1981 INTERMAG Conference, Grenoble, France, May 12 to 15. The equalizer of this publication partially restores the DC and low frequency content of a digital playback signal by centering the midpoint between the extreme peak amplitudes of the integrated signal. The centering is obtained by clamping and hard limiting the amplitude extremes of the integrated playback signal waveform to obtain positive and negative logic levels. However, the displacement of zero crossings due to baseline wander is not solved by this technique. The resulting processed waveform provides only a coarse representation of the recorded digital signal because it has noisy zero crossings and therefore unreliable clock recovery and data detection.

SUMMARY OF THE INVENTION

The present invention provides an improved apparatus and method for restoring the low frequency and DC content of a AC signal such as is produced for example by a playback and equalization process as previously described.

A preferred technique according to the invention includes deriving two clamped antiphase signals each of which represents the signal excursion of the AC signal relative to a clamping datum. The difference between these two signals is a signal which retains accuracy in its zero-crossings but has an average level which is a measure of the baseline wander. In order to restore the DC and low frequency content of the equalized signal, the difference signal may be hard-limited, and the hard-limited signal may be integrated to provide a signal which resembles the baseline wander and which can therefore be algebraically summed with the equalized signal to cancel the baseline wander in the equalized signal.

Various other objects and features of the invention will be apparent from the following detailed description.

BRIEF DESCRIPTION OF THE DRAWINGS

Figure 1 is a functional block diagram of a magnetic playback channel incorporating a low frequency restorer in accordance with the preferred embodiment of the invention.

Figure 2 is a more detailed schematic diagram corresponding to the block diagram of Figure 1.

Figure 3 is a functional block diagram of an alternative embodiment of the invention.

Figures 4A to 4E are examples of graphic illustrations of waveforms occurring at various locations in the circuit of Figures 1, 2 and 3.

Figure 5 is a functional block diagram showing a particular example of the embodiment of Figure 3.

DETAILED DESCRIPTION

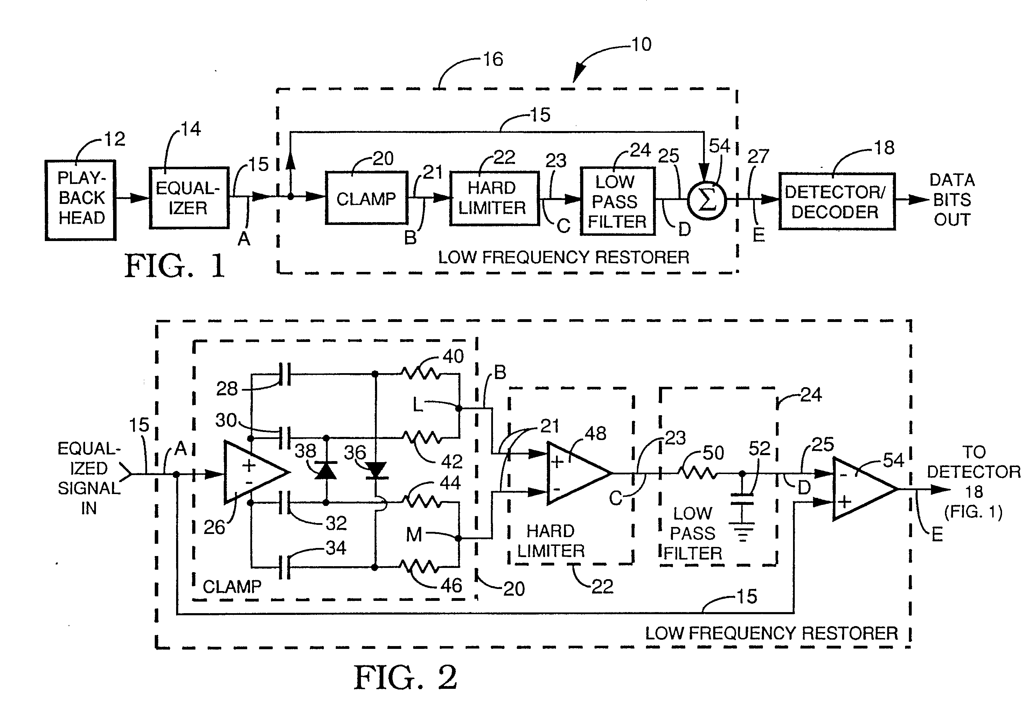

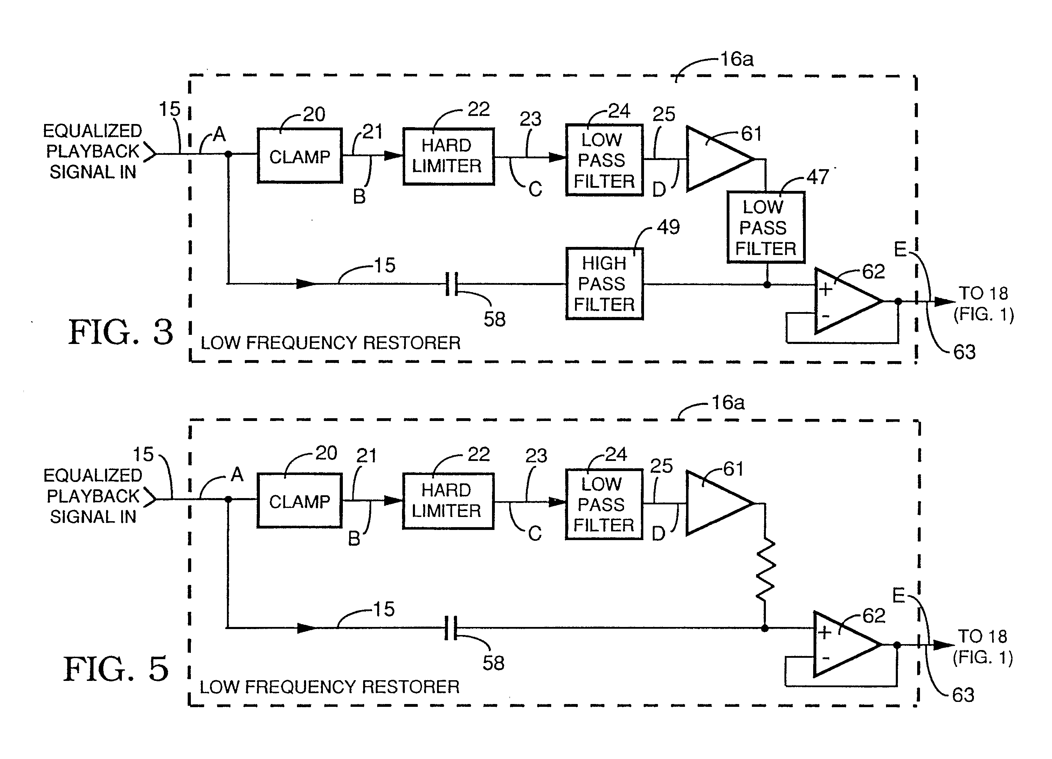

Figure 1 shows an example of a magnetic playback channel 10, having a playback head 12, followed by a frequency response equalizer 14, a low frequency restorer 16 in accordance with the preferred embodiment, and a zero crossing detector/decoder 18. The playback head 12, equalizer 14, and zero crossing detector/decoder 18 are well known in the art of magnetic recording/playback and detection of digital signals, and therefore will not be described in detail. An example of a playback equalizer is described in the previously mentioned U.S. patent 4,110,798. In that prior art equalizer the equalized signal is applied directly to a zero crossing detector for detection and decoding. However, the equalized signal at the output of equalizer 14 lacks the low frequency and DC information content for the reasons which have been explained above. Without that information the equalized signal exhibits the above-described baseline wander, which in turn causes jitter in zero crossing and resulting errors in the data detection provided by the detector/decoder 18.

The low frequency restorer 16 of the present invention restores the missing low frequency and DC content of the equalized digital signal, as it will be described below. With further reference to Figure 1, the low frequency restorer 16 comprises a double rectifying circuit 20, followed by a hard limiter 22 and a low pass filter 24. The output signal from the low pass filter 24 on line 25 is algebraically combined with the output signal on line 15 of equalizer 14 by summing circuit 54. The resulting summed signal on line 27 is applied to the zero crossing detector/decoder 18 for data detection and decoding.

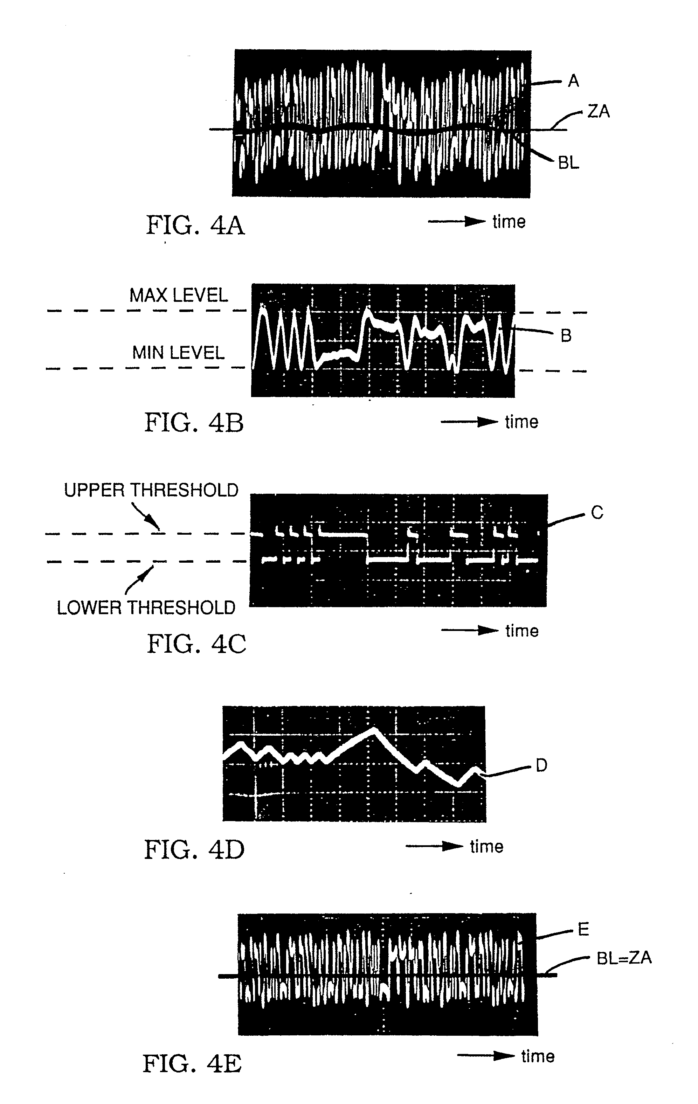

The operation of the preferred embodiment shown in Figure 1 will be broadly described with reference to the waveforms illustrated as an example in Figures 4A to 4E. As will be seen from the comparison of the waveforms of Figures 4A to 4E, the waveforms in Figures 4B to 4D have their time scale expanded for better clarity of representation.

An example of an equalized playback signal waveform A on line 15 is shown in Figure 4A. The base line BL of that waveform is not a straight line corresponding to the zero axis ZA. Instead, the baseline BL in Figure 4A is affected by the lack of low frequency information and exhibits baseline wander as previously described.

The signal A on line 15 is applied to the circuit 20 which operates as a differential clamp. The circuit comprises two oppositely phased clamps, in order to provide two oppositely phased signals which have the same nominal DC term. These signals appear at the nodes L and M in Figure 2, at the respective inputs of the hard limiter 22. Each signal represents with a respective polarity half the excursion of the input signal relative to a datum which is set by the clamping action and corresponds to approximately half the difference between the input signal and the inverted input signal.

The signal B represents the difference between the signals at the nodes L and M. It is applied on the lines 21 to the hard limiter 22 which limits the signal B to an upper and lower threshold level, as shown by the waveform C in Figure 4C. The hard limited signal C on line 23 is applied to low pass filter 24, which in the preferred embodiment is implemented by an integrator, as shown in Figure 2. The integrated signal D on line 25 from the low pass filter 24 is shown in Figure 4D. It (and signal C) are shown for convenience with reversed polarity with respect to the baseline wander. Signal D approximately follows the baseline wander of signal A shown in Figure 4A.

In accordance with a particular feature of the invention, signal D on line 25 is utilized as a correction signal, to eliminate the baseline wander in the equalized signal A as follows. A summing circuit 54 combines the signal D on line 25 with signal A on line 15, and applies the resulting summed signal E on line 27 to the zero crossing detector/decoder 18. As may be seen in Figure 4E, the signal E has its baseline BL represented by a substantially straight line, which corresponds to the zero axis ZA. From a comparison of the waveform A of Figure 4A and waveform E of Figure 4E it follows that the resulting signal waveform on line 27 at the output of the summing circuit 54 has the baseline wander eliminated therefrom and it corresponds to the originally recorded and played back data which has its low frequency and DC content restored. The signal E on line 27 does not suffer from zero crossing jitter due to baseline wander and therefore the accuracy of data detection by the zero crossing detector/decoder 18 is substantially improved.

Now a more detailed description of the preferred embodiment and its operation will be given with reference to the detailed circuit diagram of Figure 2.

The circuit 20, preferably implemented as a differential rectifying clamp, includes a phase splitter amplifier 26, capacitors 28, 30, 32 and 34, a pair of diodes 36 and 38 and resistors 40, 42, 44 and 46.

The equalized signal is applied to the phase splitter amplifier 26 which "splits" the equalized signal into a noninverted output signal at its noninverting (+) output and an inverted equalized signal at its inverting (-) output. Capacitor 28 is coupled between the noninverting output of amplifier 26 and the anode of diode 36, and capacitor 34 is coupled between the inverting output of amplifier 26 and the cathode of diode36. Capacitor 30 is coupled between the noninverting output of amplifier 26 and the cathode of diode 38, and capacitor 32 is coupled between the inverting output of amplifier 26 and the anode of diode 38.

A first resistive voltage divider is connected between the junction of capacitor 28 and the anode of diode 36 and the junction of capacitor 30 and the cathode of diode 38. This voltage divider comprises equal resistors 40 and 42; the mid point of the divider is the node L.

A second resistive voltage divider, comprising resistors44 and46, is connected between the junction of capacitor 32 and the anode of diode 38 and the junction of capacitor 34 and the cathode of diode 36. The mid point of the second divider is the node M.

If the signal A input to the phase-splitting amplifier is positive-going, current may flow from the non-inverting terminal via capacitor 28, through forwardly biased diode 36 and via capacitor 34 to the inverting terminal. The potentials at the anode and cathode of diode 36 will be approximately zero, because the diode 36 is effectively a short circuit. This provides clamping of the ends of the dividers adjacent the conducting diode to a datum potential which is substantially halfway between the positive excursion of the input signal and its negative counterpart and is accordingly effectively zero. At node L appears a signal approximately half that of the positive excursion of signal A. Also, the signal at the node M is equal in magnitude to the signal at the node L but is opposite in phase because it is derived from the difference between the potential at the inverting output of the phase splitter and the clamping datum provided by the diode 36.

When the signal polarity of the input signal A reverses, so that the non-inverting output is negative and the inverting output is positive, the diode 38 conducts to provide a clamp for the signals at nodes L and M.

The difference signal B between nodes L and M is a clamped version of the input signal A and is the difference between two similar but antiphase signals which have the same zero-crossings and the same nominal DC term.

The signal B to the hard limiter 22. Hard limiter 22 may have a voltage comparator 48 which saturates to limit its output signal to an upper and lower threshold, the thresholds being above and below the clamping datum for signal B and selected to be much less than the amplitude of signal B. The hard limited signal C provided by comparator 48 is shown in Figure 4C.

The hard limited signal C on line 23 is applied to a low pass filter 24 which has a series resistor 50 and a shunt capacitor 52, which determine the time constant t1 of flow pass filter 24. Preferably, the time constant t1 is chosen to approximate the time constant of the combined characteristics of the playback head 12 and the integrating channel of equalizer 14 of Figure 1. The thusly obtained correction signal D on line 25 at the output from low pass filter 24 is an approximation of the DC and low frequency signal components of the original data waveform. The positive-going portions of signal D correspond to the positive portions of signal C.

In the preferred embodiment the summing circuit 54 is implemented by a differential amplifier. The low frequency correction signal D on line 25 is applied to the inverting input of amplifier 54 and the equalized signal on line 15 is applied to the noninverting input of amplifier 54. The resulting summed signal E at the output from amplifier 54 is shown in Figure 4E. It is the equalized playback signal which has its DC and low frequency content restored.

## OTHER EMBODIMENTS

Figure 3 shows an alternative embodiment of a low frequency restorer 16a of the invention. The low frequency restorer 16a has a clamping circuit 20, hard limiter 22, and low pass filter 24, corresponding to those above-described with reference to Figures 1 or 2. However, in addition, it includes a high pass filter 49 coupled in the equalization signal pass on line 15, and a second low pass filter 47 coupled in the correction signal pass on line 25. The high pass filter 49 serves to remove low frequency components which may have been induced in the playback signal as cross talk, for example from closely located adjacent tracks of the magnetic recording medium, and boosted by the integrating channel of equalizer 14. The second low pass filter 47 which terminates the first low pass filter 24, compensates for the low frequency attenuation provided by the high pass filter 49. As hereinabove described, the time constant t1 of low pass filter 24 was selected to approximate the time constant derived from the combined characteristics of the playback head 12 and the integrating channel of the equalizer 14 of Figure 1. The time constant t2 of the second low pass filter 47 is selected to have the same cutoff frequency as the time constant of the high pass filter 49.

A buffer amplifier 61 is coupled between an output of the first low pass filter 24 and an input of the second low pass filter 47 to transform the impedances between these two devices. As a summing circuit, in this embodiment a voltage follower 62 is utilized. In this example the low pass filtered correction signal at the output of second low pass filter 47 and the high pass filtered equalized signal at the output of high pass filter 49 are summed with the same polarity.

Figure 5 shows a particular implementation of the second low pass filter 47, and the high pass filter 49 of Figure 3, for applications when the low frequency restorer 16a is driven by a low impedance source, such as equalizer 14 of Figure 1, and it drives a high input impedance device, such as a voltage follower 62. In this particular embodiment the output of amplifier 61 is coupled via a resistor 56 to the input of voltage follower 62. The equalized playback signal on line 15 is coupled via a capacitor 58 to the same input of voltage follower 62.

In this particular embodiment as shown in Figure 5, the resistor 56 and the capacitor 58 function both as a high pass filter with respect to the equalized signal on line 15 and as a low pass filter with respect to the correction signal on line 25. Both the high pass characteristic and the low pass characteristic of these high pass and low pass filters have substantially the same cutoff frequency since both are defined by the same RC time constant t2 of resistor 56 and capacitor 58.

## Claims

1. A circuit for use in restoring a DC level to an equalized AC signal, comprising:
means (20) responsive to the AC signal to provide two clamped anti-phase signals each representative of the signal excursions of the AC signal; and
means (22, 24) responsive to the difference between said two signals to provide a signal which is representative of baseline wander of the AC signal.

2. A circuit according to claim 1, further comprising means (54) for combining the said representative signal with the AC signal to restore the said DC level.

3. A circuit according to claim 1 or 2 in which the means (22, 24) responsive to the difference between the said two signals comprises a hard-limiter (22) followed by an integrating low-pass filter (24).

4. A circuit according to any foregoing claim in which the said means (20) responsive to the AC signal comprises a phase-splitting amplifier (26) having a non-inverting output and an inverting output, a first resistive voltage divider (40, 42) capacitatively coupled at each end to the said non-inverting output, a second resistive voltage divider (44, 46) capacitatively coupled at each end to the said inverting output, a first rectifier (36) being coupled with a first polarity between one end of the first divider and one end of the second divider and a second rectifier (38) being coupled with a second polarity between the other ends of the dividers.

5. A circuit for restoring DC and low-frequency components to an equalized AC signal, comprising:
means (20) for clamping said AC signal in respective opposite senses to provide a first signal which represents signal excursions of the AC signal and a second signal which is in antiphase with said first signal;
means (21) for providing a difference signal representing the difference between the first and second signals;
means (22) for hard-limiting the said difference signal;
means (24) for integrating the hard-limited difference signal to provide a correction signal; and
means (54) for algebraically combining the equalized AC signal and the correction signal.

6. A low frequency restorer for restoring missing DC and low frequency signal components to a digital signal which has been subjected to magnetic recording, playback and subsequent equalization process, comprising:
means (20) for differentially clamping said equalized signal to provide a clamped signal;
means (22) for hard limiting said clamped signal to an upper and lower threshold level, respectively, to provide a hard limited signal;
low pass filter means (24) for filtering said hard limited signal to obtain a correction signal which is an approximation of said missing signal components; and
summing means (54) for summing said equalized signal and said correction signal to provide an equalized signal which has said DC and low frequency components restored.

7. A low frequency restorer according to claim 6 wherein said digital signal is played back from a magnetic medium utilizing a playback head providing a playback signal which is a time differential of the recorded flux, and wherein said equalized signal is provided by an equalizer comprising a parallel combination of a low pass integrating circuit and a high pass differentiating circuit, and wherein a time constant of said low pass filter means in said low frequency restorer is selected to correspond to a time constant derived from the combined frequency characteristics of said playback head and said low pass integrating circuit.

8. A low frequency restorer according to claim 7 further comprising second low pass filter means (47) coupled in a path of said correction signal to said summing means, and high pass filter means coupled in a path of said equalized signal to said summing means.

9. A low frequency restorer according to claim 8 wherein said equalized signal is applied by a low impedance device, said summing means comprises a high impedance device, and wherein said second low pass filter means comprises a resistor coupled in said correction signal path to said summing means, and a capacitor (58) coupled in a path of said equalized signal to said summing means, and wherein said high pass filter means comprises the same resistor and capacitor coupled to said input of said summing means.

10. A low frequency restorer for restoring missing DC and low frequency signal components to a digital signal which has been subjected to magnetic recording, playback and subsequent equalization process, and for eliminating low frequency cross talk induced into the equalized signal, comprising a correction signal path having means (20) responsive to said equalized signal to provide a differentially clamped signal; means (22) for hard limiting said differentially clamped signal to an upper and lower threshold level, respectively, to provide a hard limited signal; first low pass filter means (24) for filtering said hard limited signal to provide a correction signal which is an approximation of said missing signal components; and second low pass filter means (47) for filtering said correction signal; said low frequency restorer further comprising an equalized signal path in parallel with said correction signal path, having high pass filter means (49) for filtering said equalized signal; and summing means (62) for summing a output signal of said high pass filter and an output signal of said second low pass filter to provide an equalized signal which has said DC and low frequency components restored and said low frequency cross talk eliminated therefrom.

11. A low frequency restorer for restoring missing DC and low frequency signal components to a digital signal which has been subjected to magnetic recording, playback and subsequent equalization process, and for eliminating low frequency cross talk induced into the equalized signal, wherein said equalized signal is applied by a low impedance device and said summing means comprises a high impedance device, comprising:

means (22) for differentially clamping said equalized signal to provide a differentially clamped signal;

means (22) for hard limiting said differentially clamped signal to an upper and lower threshold level, respectively, to provide a hard limited signal;

first low pass filter means (24) for filtering said hard limited signal to provide a correction signal which is an approximation of said missing signal components;

summing means (62) for summing said equalized signal and said correction signal to provide an equalized signal which has said DC and low frequency components restored;

resistor means coupled between an output of said first low pass filter means and said summing means; and

capacitor means (58) coupled in a path of said equalized signal to said summing means, wherein a combination of elements comprising said resistor means and capacitor means provides a second low pass filter means in a path of said correction signal, and said combination of elements provides a high pass filter means in said equalized signal path.

FIG. 1

PLAY-BACK HEAD — 12
EQUAL-IZER — 14
15
A
CLAMP — 20
B — 21
HARD LIMITER — 22
23
C
LOW PASS FILTER — 24
25
D
54
Σ — 27
E
DETECTOR/DECODER — 18
DATA BITS OUT
LOW FREQUENCY RESTORER — 16
15
10

FIG. 2

EQUAL-IZED SIGNAL IN — 15
A
26
28
30
32
34
38
36
40 — L — 42
44 — M — 46
B
21
48
+ —
HARD LIMITER — 22
C — 23
50 — 52
LOW PASS FILTER — 24
D — 25
54
+ —
E
TO DETECTOR 18 (FIG. 1)
CLAMP — 20
LOW FREQUENCY RESTORER — 15

FIG. 3

EQUALIZED PLAYBACK SIGNAL IN — 15 — A

CLAMP — 20 — 21 — B

HARD LIMITER — 22 — 23 — C

LOW PASS FILTER — 24 — 25 — D

61

LOW PASS FILTER — 47

HIGH PASS FILTER — 49

15 — 58

62 — E

TO 18 (FIG. 1)

63

16a

LOW FREQUENCY RESTORER

FIG. 5

EQUALIZED PLAYBACK SIGNAL IN — 15 — A

CLAMP — 20 — 21 — B

HARD LIMITER — 22 — 23 — C

LOW PASS FILTER — 24 — 25 — D

61

15 — 58

62 — E

TO 18 (FIG. 1)

63

16a

LOW FREQUENCY RESTORER

EP 0 414 548 A2

FIG. 4A     → time

FIG. 4B     → time

FIG. 4C     → time

FIG. 4D     → time

FIG. 4E     → time